# EUROPÄISCHE PATENTSCHRIFT

(11) **EP 2 339 742 B1**
(45) Veröffentlichungstag und Bekanntmachung des Hinweises auf die Patenterteilung: **06.10.2021**
(21) Anmeldenummer: 10196368.4
(22) Anmeldetag: 22.12.2010
(51) Int. Cl.: G01P 3/48, H02P 7/00

(54) **Verfahren und Vorrichtung zur Positionierung eines Abtriebsgliedes eines elektromotorischen Antriebs, insbesondere für ein Möbel**
Method and device for positioning an output member of an electric motor drive, in particular for an item of furniture
Procédé et dispositif de positionnement d'une articulation d'un entraînement à moteur électrique, notamment pour un meuble

(30) Priorität: 22.12.2009 DE 102009059267
(43) Veröffentlichungstag der Anmeldung: 29.06.2011
(73) Patentinhaber: DewertOkin Technology Group Co., Ltd., Jiaxing City, Zhejiang Province 314011 (CN)
(72) Erfinder: Hille, Armin, 33659, Bielefeld (DE)
(74) Vertreter: Dantz, Jan Henning

(56) Entgegenhaltungen:
- DE-A1- 3 527 906
- DE-A1- 10 028 038
- DE-A1- 19 921 344
- DE-C1- 19 729 238
- US-B1- 6 320 341
- None

## Beschreibung

Die Erfindung betrifft ein Verfahren zur Positionierung eines Abtriebsgliedes eines elektromotorischen Antriebs für ein Möbel. Die Erfindung bezieht sich auch auf eine dementsprechende Vorrichtung.

Derartige elektromotorische Antriebe sind zur Verstellung von Möbeln bekannt, wie beispielsweise Betten, Sitzmöbel, Tische und dergleichen. Zur Positionierung von Abtriebsgliedern dieser elektromotorischen Antriebe und somit von verstellbaren Möbelteilen gibt es unterschiedliche Lösungen. Gemäß der Druckschrift DE 199 21 344 A1 weist ein elektromotorischer Antrieb zwei Endschalter auf, die jeweils bei Erreichen der Endlagen des Antriebs eine Abschaltung oder eine Umschaltung des Elektromotors bewirken. So können allerdings nur die Endpositionen erfasst werden. Eine weitere Möglichkeit zur Positionierung besteht darin, jedem Antrieb einen veränderlichen Widerstand, z.B. ein Potentiometer, zuzuordnen, dessen Widerstand die aktuelle Position wiedergibt. Derartige Potentiometer sind jedoch kostenaufwändig, mechanisch aufwändig mit dem Antrieb über entsprechende Getriebe zu koppeln und somit für einen Einsatz in dem niedrigen Preisniveau des Möbelmarktes nicht verwendbar. Ein weiterer Lösungsansatz verwendet so genannte Hall-Sensoren, von denen jeweils zumindest zwei zur Drehrichtungserkennung und Impulserfassung pro Umdrehung einem Antrieb zugeordnet sind. Diese Anwendung ist für hochgenaue Anwendungen mit einem entsprechenden Kostenniveau vorgesehen. Weitere Industrieanwendungen benutzen zum Drehgeber mit Lichtschranken und Teilscheiben, die entsprechend kostenaufwändig und nicht raumsparend sind. Ferner sind, z.B. aus der Druckschrift DE 35 27 906 A1, Auswertungen der so genannten Gegen-EMK bekannt, die jedoch nur dann funktionstüchtig sind, wenn der zugehörige Kommutatormotor unter Spannung steht. In Endlagen, in welchen der Motor ausgeschaltet ist, aber dennoch weiterläuft, ist keine Impulsmessung mehr möglich.

Die Druckschrift US 6 320 341 B1) betrifft ebenfalls eine Steuervorrichtung für ein verstellbares Abtriebsglied mit einem Gleichstrommotor für eine Positionsverstellung, bei der Impulse einer Gegen-EMK zur Positionserfassung ausgenutzt werden. Die an einem Widerstand abnehmbaren Impulse des Motors werden einer Motorimpulsgeneratorschaltung, welche schaltbare Filter aufweist, zugeleitet. Im Falle einer Abweichung einer aktuellen Position von einer berechneten Position erfolgt eine Korrektur. Dazu wählt ein Mikrocomputer der Steuervorrichtung aus einer Tabelle einen Korrekturwert in Abhängigkeit von Randbedingungen aus. Die Korrekturwerte der Tabelle müssen aufwändig experimentell bestimmt werden.

Aus der Druckschrift DE 100 28 038 A1 ist ein Verfahren zum Bestimmen einer Position eines durch die Antriebswelle eines Gleichstrommotors angetriebenen Elements innerhalb einer vorbestimmten Bewegungsstrecke zwischen zwei Blockpositionen bekannt. Auch hierbei werden im Ankerstromsignal enthaltene Stromrippel ausgewertet. Bei einem Einfahren des angetriebenen Elements in eine Blockposition wird der Gleichstrommotor vor Erreichen der systemseitig definierten Blockposition stromlos geschaltet, nach einer vorbestimmten Zeitspanne zum letztendlichen Einfahren des angetriebenen Elements in die Blockposition erneut aktiv bestromt, und, nachdem das angetriebene Element in seine mechanische definierte Blockposition gebracht worden ist, wird eine systemseitige Normierung dieser Blockposition durchgeführt. Durch diese wird ein Rippelzähler wieder auf null gesetzt. Dieses Verfahren eignet sich jedoch nur bei einem regelmäßigen Anfahren der Blockpositionen.

Gemäß der Druckschrift DE 197 29 238 C1 werden fehlende Impulse bei einem ausgeschalteten Motor durch ein parallel dazu arbeitendes Motorzustandsmodell ergänzt, um eine Position über Impulse der Gegen-EMK korrekt zu erfassen. Dazu wird aus dem Motorstrom und der Motorspannung auf einen wahrscheinlichen Wert der aktuellen Drehzahl geschlossen und ein zulässiger Soll-Wertebereich der nächsten Kommutierung bestimmt. Kann im Soll-Wertebereich kein Kommutierungszeitpunkt bestimmt werden, wird der extrapolierte Wert verwendet. Dazu ist ein Motorzustandsmodell mit motorspezifischen und lastabhängigen Größen erforderlich.

Es besteht der Bedarf für Verfahren zur Positionierung von elektromotorischen Antrieben für den Niedrigpreissektor, insbesondere bei Möbeln.

Die Aufgabe der vorliegenden Erfindung besteht darin, ein Verfahren zur Positionierung des Abtriebsgliedes eines elektromotorischen Antriebs für ein Möbel bereitzustellen. Eine weitere Aufgabe ist es, eine Vorrichtung zur Durchführung eines solchen Verfahrens anzugeben.

Erfindungsgemäß wird diese Aufgabe durch ein Verfahren mit den Merkmalen des Anspruchs 1 und eine Vorrichtung mit den Merkmalen des Anspruchs 10 gelöst.

Eine der Erfindung zugrunde liegende Idee besteht darin, dass ein durch aufbereitete Impulse erlangter Zählerwert mit einem Korrekturwert korrigiert wird. Dadurch wird der Zählerwert der aktuellen Position bis auf eine akzeptable Toleranz angenähert.

Es hat sich durch Versuche gezeigt, dass für einen bestimmten Motortyp eine feste Anzahl von Zählsignalen für jeweils einen Einschalt- oder Ausschaltvorgang als Korrekturwert vorgesehen werden kann. Ein Fehler, dass heißt eine Abweichung zwischen dem aktuellen Positionswert und dem die Position repräsentierenden Zählerwert verringert sich dadurch.

Die Impulse aus der Gegen-EMK des elektromotorischen Antriebs werden erfindungsgemäß durch Filtern, Mittelwertbildung und Vergleichen aufbereitet, wobei Störungen minimiert werden. Unter einer Gegen-EMK wird die elektromotorische Kraft verstanden, die beispielsweise beim Einschalten einer elektrischen Maschine bzw. eines Motors zu überwinden ist. Durch Verwendung eines Schaltnetzteils erfolgt eine Energieversorgung des Antriebs mit einer konstanten, hochstabilen Gleichspannung. Auch dadurch verringern sich Störungen des Nutzsignals und der Impulse.

Beim Ermitteln des Korrekturwertes kann eine Art des Anhaltens anhand von Endschaltern und/oder Schaltmitteln und/oder Referenzschalter des elektromotorischen Antriebs erfasst werden. Die Schalter und/oder die Schaltmittel stehen dann mit einem Betätiger, z.B. einer Nocke, des Abtriebsgliedes in Wirkverbindung. Dadurch wird die Bestimmung des Korrekturwertes präziser und ein Fehler des Zählerwertes weiter verringert. Gemäß einer weiteren Ausführungsform setzt ein Endschalter und/oder ein Schaltmittel und/oder ein Referenzschalter den Zählwert des Speichers auf einen voreingestellten Wert, wobei der mindestens eine Schalter von dem Abtriebsglied des elektromotorischen Antriebs, beispielsweise in Form einer Schaltnocke betätigt wird.

Beim Ermitteln des Korrekturwertes kann eine Art des Anhaltens auch bei einer beliebigen Position des Abtriebsgliedes anhand von Motorsteuermitteln des Motors des elektromotorischen Antriebs erfasst werden. Der elektromotorische Antrieb kann von einem Bediener mittels Betätigungselemente, z.B. Handschalter, ein- und ausgeschaltet werden. Erreicht das Abtriebsglied des Antriebs eine gewünschte, beliebige Position zwischen Endschaltern, so wird das Betätigungselement losgelassen und das zugehörige Motorsteuermittel ausgeschaltet. Das Motorsteuermittel kann z.B. mindestens ein Relais, ein Halbleiterschalter oder/und ein manuell betätigbares Schaltelement sein. Das Motorsteuermittel unterbricht dann zumindest eine Motorzuleitung und erzeugt eine so genannte generatorische Bremse, wobei die Motoranschlüsse kurzgeschlossen werden. Impulse aus der Gegen-EMK des dabei auftretenden Kurzschlussstroms des Motors können ebenfalls zur Erhöhung einer Genauigkeit des Korrekturwertes ausgewertet werden.

Es sind deutlich mehr Impulse pro Umdrehung des Motors des Antriebs erzeugbar als im Stand der Technik mit Hall-Sensoren. Durch eine Verwendung eines Kommutatormotors mit einer hohen Kommutatorlamellenzahl lässt sich dies noch steigern.

Es ist vorteilhaft, dass beim Ermitteln des Korrekturwertes eine Geschwindigkeit und/oder Belastung des elektromotorischen Antriebs als Randbedingung erfasst werden kann. Dadurch lässt sich der Korrekturwert noch weiter eingrenzen.

Die Größe des Korrekturwertes kann somit von Randbedingungen abhängig sein. Eine erste Randbedingung ist dadurch gegeben, dass der Elektromotor bei Erreichen der Endlage des Abtriebsgliedes abgeschaltet wird, indem z.B. durch einen als Öffner ausgebildeten Endlagenschalter den Motorstromkreis öffnet. Als Folge dessen rotiert der Motor wegen seiner Schwungmasse noch einige Umdrehungen bis zum Stillstand, wobei keine Gegen-EMK mehr auswertbar ist. Da der jeweilige Endlagenschalter mit der Steuereinrichtung in Wirkverbindung steht, kann ein fester Korrekturwert oder ein einer Last entsprechender variabler Korrekturwert gebildet werden. Gemäß einer weiteren Randbedingung wird der Elektromotor beim Abschalten nach dem Prinzip der so genannten generatorischen Bremse (d.h. durch Kurzschließen seiner Anschlüsse, z.B. durch Relaiskontakte) zum Stillstand gebracht, wobei der Motor sehr zügig in den Stillstand versetzt wird. Auch hierbei steht die Abschalteinrichtung mit der Steuereinrichtung in Wirkverbindung, und auch hierbei kann keine Gegen-EMK ausgewertet werden, weshalb ein anderer Korrekturwert vorgesehen ist.

Dabei ist es vorgesehen, dass die Geschwindigkeit und/oder Belastung des elektromotorischen Antriebs aus der Gegen-EMK ermittelt wird. So ist keine zusätzliche Messeinrichtung notwendig, da die auszuwertenden Signale bereits vorhanden sind, und der Korrekturwert kann variabel ausgebildet sein.

Wenn beim Speichern des mittels des Korrekturwertes korrigierten Zählerwertes als aktuelle Position des Abtriebsgliedes des elektromotorischen Antriebs der korrigierte Zählerwert mit einem vorgebbaren Grenzwert verglichen wird, kann ein Signal anhand dieses Vergleichs ausgegeben werden. Somit kann der vorgebbare Grenzwert mit einer wiedereinzunehmenden Position übereinstimmen, wodurch eine so genannte Memoryfunktion ermöglicht wird. Auch ein Endschalter oder ein Schaltvorgang kann an beliebiger Stelle eines Verstellwegs des elektromotorischen Antriebs so ausgelöst oder beendet werden. Gemäß einer weiteren Ausführungsform kann der Zählwert mit einer optischen Anzeige, beispielsweise mit einer Ziffernanzeige, gekoppelt sein und den Verstellweg oder eine Positionierung in Form einer Längenmessstrecke oder einer Winkelmessstrecke einem Benutzer oder einer Person anzeigen.

Durch Anfahren zumindest eines Endschalters kann eine Referenzposition des Abtriebsgliedes des elektromotorischen Antriebs gebildet werden, wobei der Zählerwert auf einen vorgebbaren Referenzwert eingestellt wird, zum Beispiel auf Null. Damit wird eine einfache Justierung möglich, auch nach manueller Verstellung des Antriebs, z.B. in einem Notfall.

In einer weiteren Ausführung können in einer Folge von Impulsen der Gegen-EMK fehlende Impulse erkannt und entsprechend in der Auswertung, insbesondere mittels eines Korrekturwertes, ergänzt werden. Damit ist eine bestimmte Fehlertoleranz geschaffen, so dass auch Motoren mit groben Fertigungstoleranzen, z.B. hinsichtlich von Wicklungen oder/und Kollektorenlamellen zum Einsatz kommen können. Dies ist insbesondere im Niedrigpreissektor von Möbeln von großem Vorteil.

Eine erfindungsgemäße Vorrichtung des Anspruches 10 weist Folgendes auf: einen Messwertgeber zur Erfassung einer Gegen-EMK eines Motors des zuzuordnenden elektromotorischen Antriebs; ein Filter, einen Mittelwertblock und einen Komparator zur Aufbereitung von Impulsen des Messwertgebers; und einen Steuerblock zur Auswertung der Impulse. Der Steuerblock besitzt eine Steuereinrichtung, einen Zähler und eine Speichereinrichtung, wobei die Steuereinrichtung zur Ermittlung zumindest eines in der Speichereinrichtung gespeicherten Korrekturwertes und zur Verknüpfung dieses Korrekturwertes mit einem Zählerwert ausgestaltet ist. Diese elektrische Ausrüstung ist für einen elektromotorischen Möbelantrieb in einfachster Weise ausgelegt und somit kostengünstig.

Die Steuereinrichtung kann mit zumindest einem Dateneingang für Randbedingungen versehen sein. Hierzu kann sie mit einer Motorsteuerung des elektromotorischen Antriebs und/oder mit dessen Endschaltern so verbindbar sein, dass Spannungsverhältnisse an bestimmten Anschlüssen erfasst werden, aus denen auf einfache Weise ein Rückschluss auf Drehrichtung des eingeschalteten Antriebs möglich ist. Es ist auch möglich, über die Endschalter zu erkennen, ob sich ein Abtriebsglied des Antriebs aktuell auf einer Position in einer Endlage, d.h. an einem Endschalter, oder zwischen diesen befindet.

In einer weiteren Ausführungsform kann die Vorrichtung eine Funktionseinheit zur Erkennung von fehlenden Impulsen in einer Impulsfolge der Gegen-EMK und zur Erzeugung eines entsprechenden Korrekturwertes aufweisen. Damit wird die Genauigkeit eines abgespeicherten Positionswertes erhöht.

Der Messwertgeber zur Erfassung einer Gegen-EMK des Motors des zuzuordnenden elektromotorischen Antriebs kann vor einem Motorschaltmittel der Motorsteuerung in oder/und an einer Zuleitung zu dem Motorschaltmittel oder/und hinter dem Motorschaltmittel zwischen diesem und dem Motor des zuzuordnenden elektromotorischen Antriebs in oder/und an mindestens einer Motorzuleitung angeordnet sein. Wenn der Messwertgeber zwischen dem Motorschaltmittel und dem Motor des zuzuordnenden elektromotorischen Antriebs angeordnet ist, kann auch ein Kurzschlussstrom des sich noch bewegenden Motors ausgewertet werden. Dadurch wird die Genauigkeit eines Korrekturwertes erhöht. Der Begriff Motorschaltmittel bezeichnet ein Relais und/oder einen Halbleiterschalter, mit welchen Motorzuleitungen mit dem Motor verbindbar sind. Diese Motorschaltmittel unterscheiden sich von den Endschaltern und den anderen Schaltmitteln dadurch, dass sie nicht mit einem Betätiger, z.B. einer Nocke, des Abtriebsgliedes in Wirkverbindung stehen.

Ein elektromotorischer Antrieb für ein Möbel weist die oben beschriebene Vorrichtung auf.

Nachfolgend wird die Erfindung anhand der in den schematischen Figuren der Zeichnung angegebenen Ausführungsbeispiele näher erläutert. Es zeigt dabei:
- Figur 1: ein schematisches Blockschaltbild eines Ausführungsbeispiel eines elektromotorischen Antriebs mit einer erfindungsgemäßen Vorrichtung; und
- Figur 2: ein Flussdiagramm zur Erläuterung eines erfindungsgemäßen Verfahrens;

Gleiche Bezugszeichen in den Figuren bezeichnen gleiche oder ähnliche Bauteile mit gleicher oder ähnlicher Funktion.

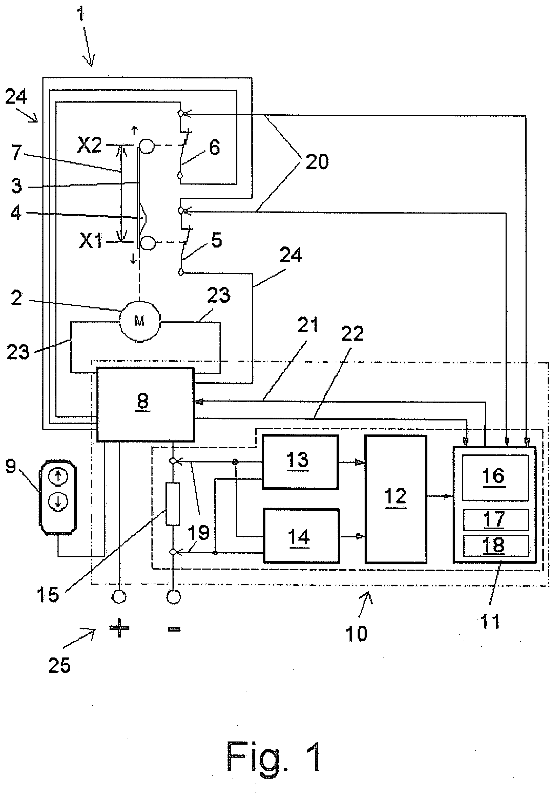

In Fig. 1 ist ein schematisches Blockschaltbild eines Ausführungsbeispiels eines elektromotorischen Antriebs 1 mit einer erfindungsgemäßen Vorrichtung 10 dargestellt.

Ein elektromotorischer Antrieb 1 ist nur schematisch gezeigt und weist einen Motor 2, insbesondere einen Gleichstromkommutatormotor, auf, dessen Abtriebswelle mit einem Getriebezug in Verbindung steht, welcher eine Drehbewegung in eine Linearbewegung eines Abtriebsgliedes 3, zum Beispiel eine Betätigungsstange für eine Höhenverstellung eines Möbels, umsetzt. Das Abtriebsglied 3 weist eine Nocke 4 auf, welche mit einem unteren Endschalter 5 und einem oberen Endschalter 6 zusammenwirkt. Unter dem Begriff "unten" ist auch "eingefahren" oder "eingezogen" zu verstehen, und der Begriff "oben" bedeutet somit auch "ausgefahren" oder "ausgezogen" bzw. "ausgeschoben". Das Abtriebsglied 3 ist durch die Nocke 4 in Zusammenwirkung mit den Endschaltern 5 und 6 für einen Verstellweg 7 vorgesehen, der durch eine untere Endposition X1 und eine obere Endposition X2 begrenzt ist, wobei die Endpositionen X1 und X2 durch die Endschalter 5 und 6 festgelegt sind.

Gemäß einer anderen nicht näher dargestellten Ausführungsform des elektromotorischen Antriebs vollzieht das Abtriebsglied des Getriebezuges eine Rotations- oder Schwenkbewegung, welche mittels einer oder wenigstens einer Getriebestufe in Form eines Räder- und/oder Hebel- und/oder Gewindespindelgetriebes in eine weitere Schwenk- oder Linearbewegung umgewandelt werden kann. Dabei kann wenigstens eine Nocke 4 vorgesehen sein, welche mit dem Abtriebsglied oder mit einem Glied des Getriebezuges gekoppelt ist. In einer bevorzugten Ausführungsform eines Getriebezuges steht die Verzahnung eines Schneckenrades oder eines Stirnrades mit der Verzahnung der Abtriebswelle des Gleichstromkommutatormotors in Verbindung, bzw. die Verzahnungen kämmen miteinander. In einer anderen Ausführungsform eines anderen Getriebezuges, welcher als nachgeschalteter Getriebezug ausgebildet sein kann, weist dieser eine Gewindespindel mit einem Außengewinde auf, wobei die Gewindegänge mit den Gewindegängen eines Mutterngewindes im Eingriff stehen und bei einer Relativbewegung der Außen- und Innengewindegänge dadurch eine Linearbewegung erzeugt wird, in dessen Reaktion ein beweglich ausgebildetes Möbelbauteil eine Linear- und/oder Schwenkbewegung ausführt.

Der Motor 2 ist über Motorleitungen 23 mit einer Motorsteuerung 8 elektrisch verbunden. Die Motorsteuerung 8 weist zum Ein- und Ausschalten des Motors 2 entsprechende Motorschaltmittel (z.B. Relais, Halbleiter) auf, welche durch eine Bedienungseinheit 9, die an der Motorsteuerung 8 angeschlossen ist, bedienbar sind. Die Motorsteuerung 8 ist an eine elektrische Energieversorgung 25 angeschlossen, welche eine Gleichspannung mit den Polen + und - bereitstellt. Diese Gleichspannung wird weiter unten noch näher erläutert.

In einer besonderen Ausführung, wobei das Motorschaltmittel als manuell betätigbares Schaltelement ausgebildet ist, ist diesem ferner noch ein Motorschaltmittel der zuvor beschriebenen Art (z.B. Relais, Halbleiter) zugeordnet, welches mit dem manuell betätigbaren Schaltelement in Reihe geschaltet ist und von der Motorsteuerung 8, der Steuereinrichtung 16 oder einer anderen nicht gezeigten Steuerung, z.B. Memorysteuerung, betätigt wird und dabei den Stromfluss zum Motor 2 unterbricht, für den Fall, dass das manuell betätigbare Schaltelement von einem Bediener noch betätigt ist.

Die Endschalter 5 und 6 sind über Endschalterleitungen 24 mit der Motorsteuerung 8 verbunden. Wenn der Motor 2 durch die Bedienungseinheit 9 durch Drücken eines Tasters (mit Pfeil in eine gewünschte Verstellrichtung) eingeschaltet wird, so wird der laufende Motor 2 bei Erreichen einer Endposition X1, X2, in welcher jeweils der zugehörige Endschalter 5, 6 durch die Nocke 4 betätigt wird, automatisch ausgeschaltet.

Durch Loslassen des betätigten Tasters der Bedienungseinheit 9 kann der Motor 2 an jeder beliebigen Position auf dem Verstellweg 7 angehalten werden. Um diese Position nach weiteren Verstellungen jedoch wieder durch den elektromotorischen Antrieb 1 einzunehmen, ist eine Speicherung dieser zuvor eingestellten Position erforderlich. Für eine solche Positionierung, die automatisch mittels einer so genannten Memoryschaltung (nicht gezeigt) durchgeführt wird (Speichern der eingestellten Position durch einen Knopfdruck und erneutes, automatisches Anfahren dieser gespeicherten Position von jeder beliebigen Stellung aus durch einen weiteren Knopfdruck), ist eine Positionserfassung erforderlich, welche durch eine Vorrichtung 10 zur Positionierung ermöglicht wird.

Die Vorrichtung 10 weist einen Steuerblock 11 mit einer Steuereinrichtung 16, z.B. ein Mikrocomputer, einem Zähler 17 und einem Speicher 18 auf. Der Steuerblock 11 ist mit einem Komparator 12 verbunden, welcher seinerseits mit einem Ausgang eines Filters 13 und eines Mittelwertblocks 14 gekoppelt ist. Der Filter 13 und der Mittelwertblock 14 sind beide eingangsseitig parallel geschaltet und über zwei Leitungen eines Messsignalabgriffs 19 an einem Messwertgeber, hier an einem Widerstand 15, angeschlossen. Der Widerstand 15 liegt in der Minus-Leitung der Energieversorgung 25 zur Motorsteuerung. Er kann auch direkt in einer Motorzuleitung 23 eingesetzt sein. Mit anderen Worten, der Messsignalabgriff 19 kann vor dem Motorschaltmittel (z.B. Relais, Motorrelais; Halbleiter, z.B. MOSFET) der Motorsteuerung 8 in oder/und an einer Zuleitung zu dem Motorschaltmittel oder hinter dem Motorschaltmittel zwischen diesem und dem Motor 2 in oder/und an mindestens einer Motorzuleitung 23 angeordnet sein.

Bei eingeschaltetem Motor 2 ruft der durch den Widerstand 15 fließende Strom einen Spannungsabfall über dem Widerstand 15 hervor, mit welchem der Filter 13 und der Mittelwertblock 14 beaufschlagt werden. Die an dem Widerstand 15 abfallende Spannung ist auch als so genannte Gegen-EMK durch den Kommutator des Motors 2 dahingehend beeinflusst, dass sie Impulse aufweist, die zur Drehzahl des Motors 2 proportional sind. Über die Drehzahl und die bekannte Übersetzung des Getriebezugs auf das Abtriebsglied 3 ist ein Zusammenhang zwischen der Impulszahl der am Widerstand 15 abfallende Spannung und dem Verstellweg 7 des Abtriebsglieds 3 ebenfalls proportional und kann zum Beispiel durch Zählen der Impulse dieser am Widerstand 15 abfallenden Spannung ermittelt werden.

Dazu wird diese Spannung als Messsignal durch den Filter 13 mittels einer Filterschaltung so gefiltert, dass die Frequenzen 50 Hz, 100 Hz und weitere notwendig zu unterdrückende Frequenzen unterdrückt werden. Gleichzeitig wird diese Spannung dem Mittelwertblock 14 zugeführt, in welchem eine Mittelwertbildung stattfindet. Das gefilterte Ausgangssignal des Filters 13 und das Mittelwert-Ausgangsignal des Mittelwertblocks 14 werden von dem Komparator 12 verglichen. Dessen Ausgangssignal enthält nun Impulse, welche dem Steuerblock 11 bereitgestellt werden, der mittels des Zählers 17 die Impulse des gefilterten und gemittelten Messsignals aus der am Widerstand 15 abfallenden Spannung zählt. Zum Beispiel liefert ein bestimmter Motor 12 Impulse/Umdrehung der Motorwelle, das entspricht bei einer Drehzahl von 3000 min⁻¹ einer Frequenz von 600 Hz.

Der Steuerblock 11 ist hier weiterhin über Endschatterabgriffe 20 mit den Endschaltern 5 und 6 verbunden, wobei jedoch gemäß einer anderen nicht dargestellten Ausführungsform der Abgriff 20 nur eines Endschalters 5 oder 6 vorgesehen ist. Dadurch ist es möglich, dass der Zähler 17 erst dann einen Zählvorgang beginnt, wenn der elektromotorische Antrieb 1, d.h. dessen Abtriebsglied 3 eine Endposition X1, X2 verlässt, was durch Betätigung der Endschalter 5, 6 über Spannungsverhältnisse an deren Anschlüssen möglich ist. Ebenso kann der Zähler 17 einen Zählvorgang beenden, wenn das Abtriebsglied 3 eine Endposition X1, X2 erreicht.

Außerdem ist der Steuerblock 11 mit einer Datenleitung 22 an der Motorsteuerung 8 angeschlossen. Hiermit ist es möglich, die Drehrichtung des Motors 2 und somit die Verstellrichtung (nach oben oder unten, links oder rechts, ausfahren oder einfahren) des Abtriebsglieds 3 über Spannungsverhältnisse an den Motorschaltmitteln des Motors 2 oder an dessen Motorleitungen 23 einfach zu ermitteln. Anhand dieser Signale über die Verstellrichtung entscheidet der Steuerblock, ob der Zähler 17 die vom Komparator 12 gelieferten Impulse, die proportional zum Verstellweg 3 sind, summiert oder subtrahiert, d.h. aufwärts oder abwärts zählt. Dabei kann zum Beispiel festgelegt sein, dass ein Ausfahren bzw. nach oben fahren eine Summation bedeutet.

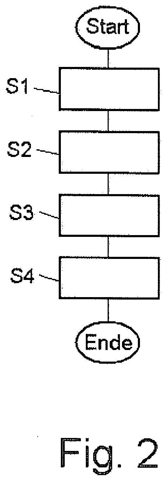

Das Erkennen des Erreichens einer Endposition X1, X2 ist von besonderer Bedeutung. In diesem Zeitpunkt wird die Spannungsversorgung des Motors 2 automatisch abgeschaltet und der Motor 2 produziert keine Gegen-EMK mehr. Das bedeutet, dass eine Positionserfassung in diesem Bereich nicht mehr stattfinden kann. Auch hier fließt ein auswertbarer Strom, wenn der Motor kurzgeschlossen ist und der Messsignalabgriff 19 hinter dem Motorschaltmittel zwischen diesem und dem Motor 2 angeordnet ist, beispielsweise der Widerstand 15 in einer (oder jeweils ein Widerstand 15 für zwei Auswertungen) in beiden Motorzuleitungen 23. Die erfindungsgemäße Vorrichtung 10 führt in diesem Fall gemäß einem erfindungsgemäßen Verfahren, das noch im Zusammenhang mit Fig. 2 weiter erläutert wird, eine Korrektur des zuletzt erhaltenen Zählerstands mit einem Korrekturwert durch. Dieser Korrekturwert ist für jeden Motortyp beim Einschaltvorgang (z.B. Verlassen eines Endschalters, Anfahren zwischen den Endschaltern, Anfahren gegen einen Last, Anfahren mit Lastunterstützung, Anfahren nach einer Bremsung) und bei einem Ausschaltvorgang (z.B. Erreichen eines Endschalters, Anhalten zwischen den Endschaltern ohne Last oder mit Last, Anhalten mit Bremsung [mechanisch oder elektrisch durch kurzschließen des Motors nach Abschalten]) ermittelbar und arttypisch. Diese motortypischen Korrekturwerte sind in der Speichereinrichtung 18 z.B. in Tabellenform (Look-Up-Tabelle) abgelegt und werden bei jedem Schaltvorgang zur Berechnung des letztendlich aktuellen Zählerwertes verwendet. Der so ermittelte aktuelle Zählerwert wird außerdem in der Speichereinrichtung 18 gespeichert.

Es ist möglich, dass bei Erreichen eines Endschalters 5 oder 6, der als Referenzposition verwendbar ist, der Zählerstand zum Beispiel auf Null oder auf einen anderen fest voreingestellten Wert gesetzt wird. Es sind auch Referenzfahrten zu dieser Referenzposition möglich.

Weiterhin sei noch erwähnt, dass die Endschalter 5, 6 den Motorstrom direkt schalten, weil die Schaltkontakte der Endschalter 5, 6 im Motorstromkreis eingebunden sind. In alternativer Ausgestaltung und gemäß der Darstellung nach Figur 1 sind die Endschalter 5, 6 als Signalschalter ausgebildet, wobei ein Motorschaltmittel der Motorsteuerung 8, z.B. ein Relais und/oder ein Halbleiterschalter, gesteuert durch das Signal des/der Endschalter 5,6 den Motor 2 ein- bzw. ausschaltet.

Da der Korrekturwert auch von der Belastung und Verstellrichtung des elektromotorischen Antriebs 1 abhängig ist, können weitere Parameter des elektromotorischen Antriebs 1 herangezogen werden, um den Korrekturwert zu präzisieren. Zum Beispiel ist es möglich, über die Gegen-EMK die Verstellgeschwindigkeit des elektromotorischen Antriebs 1 zu erfassen, welche von der Last und Drehrichtung abhängig ist. Eine Belastung ist auch durch Vergleich aktueller Stromwerte, das heißt von Spannungswerten am Widerstand 15, mit gespeicherten Tabellenwerten in der Speichereinrichtung 17 möglich zu ermitteln. Auch dieser Parameter kann dann den Korrekturwert verändern.

Der Steuerblock 11 ist weiterhin über eine Steuerleitung 21 mit der Motorsteuerung 8 verbunden. Die Steuerleitung 21 kann zum Beispiel dazu dienen, der Motorsteuerung 8 zu signalisieren, dass eine bestimmte vorgewählte Position (zum Beispiel bei einer Memorysteuerung zum Abrufen einer gespeicherten Position) erreicht ist. Es ist auch möglich, dass die Steuerleitung 21 eine Ausschaltung der Motorschaltmittel des Motors 2 vornehmen kann, wenn zum Beispiel eine kritische Situation von der Vorrichtung 10 ermittelt wird, wie beispielsweise zu hohe Geschwindigkeit, zu niedrige Geschwindigkeit bei Überlastung usw.

Die Energieversorgung 25 kann außerdem so ausgebildet sein, dass sie eine konstante, hochstabile Gleichspannung liefert. Das kann ein Akkumulator sein, oder eine hochwertige Siebung bzw. ein Schaltnetzteil. Dadurch wird eine Amplitude des Messsignals groß, Störungen des Nutzsignals und der Impulse verringern sich.

Fig. 2 zeigt ein Flussdiagramm zur Erläuterung eines erfindungsgemäßen Verfahrens. In einem ersten Verfahrensschritt S1 wird nach dem Drücken einer Verstelltaste an der Bedienungseinheit 9 zunächst ermittelt, an welcher Position sich das Abtriebsglied 3 befindet und welche Verstellrichtung gewählt ist. Hier gibt es zwei Möglichkeiten: a) in einer Endposition X1, X2 und. b) zwischen den Endpositionen X1, X2. Sollte die Verstellrichtung über eine Endposition X1, X2 hinausgehen, so erfolgt automatisch keine Verstellung. Wird eine Endposition X1, X2 verlassen, so wird in einem zweiten Verfahrensschritt S2 der zuletzt gespeicherte Zählerwert beibehalten und die Impulse je nach Verstellrichtung aufaddiert oder subtrahiert gezählt. Dies erfolgt so lange, bis in einem dritten Verfahrensschritt S3 ein Anhalten des Antriebs 1 durch Loslassen der Bedienungseinheit 9 zwischen den Endpositionen X1, X2 oder durch Erreichen einer Endposition (Endschalter 5, 6 oder vorgewählter Wert) erfolgt. Nun wird ein Korrekturwert anhand von vorgegebenen Kriterien (Belastung, Art des Anhaltens, Motortyp usw.) aus den in der Speichereinrichtung 17 (oder DIP-Schalter) vorhandenen Tabellenwerten ausgelesen. In einem vierten Verfahrensschritt S4 erfolgt dann ein Korrigieren des zuletzt erhaltenen Zählerwertes mit dem Korrekturwert und ein Abspeichern dieses Wertes als aktuelle Position des elektromotorischen Antriebs 1.

Eine Auswertung der Gegen-EMK findet bei einem Antrieb mit mehreren Motoren 2 dergestalt statt, dass jeweils nur ein Motor 2 verfahren und ausgewertet wird, wobei die anderen Motoren 2 gleichzeitig gesperrt sind und nicht verfahren werden können. Der Filter 13 kann außerdem so ausgestaltet sein, dass er Störungen, welche durch die Gegen-EMK erzeugt werden können, so unterdrückt, dass weder die Motorsteuerung 8 noch andere Funktionseinheiten des elektromotorischen Antriebs 1 gestört werden. Gleichzeitig wird mittels des Filters 13 auch eine Beeinflussung der Vorrichtung 10 und der mit dieser verbundenen Funktionseinheiten durch andere Störungen unterbunden oder zumindest erheblich abgeschwächt.

Die Vorrichtung 10 kann auch fehlertolerant ausgebildet sein, insbesondere für folgenden Fall. Die Gegen-EMK liefert eine Folge von Impulsen. Wenn zum Beispiel der Motor 2 in einer seiner Wicklungen eine abweichende Fertigungstoleranz aufweist, kann sich ein zu geringes oder gar kein auswertbares Signal bzw. Impulssignal ergeben. Beispielsweise wird in einer Impulsfolge in einer festgelegten Zeiteinheit durch die Vorrichtung 10 erkannt, dass innerhalb der Impulsfolge ein Impuls fehlt. Das heißt, dass zum Beispiel der zeitliche Abstand von zwei Impulsen größer oder kleiner ist als der zeitliche Abstand der anderen Impulse der Impulsfolge zueinander. Dies kann durch mehrfaches Ermitteln festgestellt werden. Ist damit ein fehlender Impuls verifiziert, so kann dieser fehlende Impuls mittels Software über einen entsprechenden Korrekturwert in der Auswertung hinzugefügt werden. Damit sind immer wiederkehrende fehlende Impulssignale ermittelbar. Zufällig fehlende Impulssignale können auch erkannt werden. Dabei wird jedoch ein gemittelter Korrekturwert erzeugt.

Die Erfindung kann folgende Anwendungen finden:
- Möbelantriebe, Reha- und Behandlungsgeräte (wie Lattenroste, Liegen, Sessel, Bettgestelle, Patientenlifter)
- Schwerpunkt der Weg-/Positionserkennung bei:
   a) Memoryfunktion (wobei der elektromotorische Antrieb 1 eine Speichereinheit mit wenigstens einem darin abspeicherbarem und veränderbarem Wert aufweist, welcher einer Verstellweginformation des elektromotorischen Antriebs 1 entspricht, so dass bei Entsprechen der gegenwärtigen Verstellweginformation des jeweiligen Abtriebsgliedes des jeweiligen elektromotorischen Antriebs 1 der jeweilige Motor 2 oder wenigstens ein weiterer Motor 2 ab- oder eingeschaltet wird)
   b) Synchronsteuerungen mehrerer Antriebe (wobei der elektromotorische Antrieb 1 einen Impulszähler und einen Impulsvergleicher aufweist, wobei die Impulse bei allen gleichzeitig betriebenen Motore 2 miteinander verglichen werden und ein voreilender Motor 2 energietechnisch reduziert und ein nacheilender, langsamerer Motor 2 energietechnisch höher versorgt wird)
- im Prinzip überall dort, wo keine hochpräzise Positionserkennung notwendig ist und Toleranzen im Bereich von 3 % akzeptabel sind, wie zum Beispiel bei:
   a) Memorysteuerungen von Betten, Tischen, Sitzmöbeln
   b) einfache optische Positionsanzeigen als Weg in mm oder relativ in Prozent (wobei das Möbel oder der elektromotorische Antrieb 1 eine Anzeige beispielsweise in Form einer zahlenwiedergebenden Digitalanzeige oder einer Anordnung von LED- oder LCD-Elementen aufweist, welche den Verstellwinkel, den Verstellweg oder den absoluten Verstellweg des Möbels oder eines Möbelbauteils relativ zu einem anderen Möbelbauteil in einer Wegeinheit wie Millimeter oder einer Relativeinheit wie Prozent optisch wiedergibt)
   c) Ersatz für Potentiometer bei nichtflüchtigem Speicher (wobei der elektromotorische Antrieb 1 eine Auswerteschaltung mit einem Vergleicher, einem Steller und einem Spannungsausgang aufweist, wobei der Vergleicher die gegenwärtige Impulszahl mit einer Tabelle oder einem Rechenalgorithmus vergleicht, dem Steller einen digitalen Stellbefehl übergibt und dieser einem dem Stellbefehl entsprechenden Spannungswert am Spannungsausgang anlegt)
   d) Erkennung bei manueller Kurbelverstellung (bereits oben erwähnt)
   e) Option: Kodierung im Motorkabel oder durch DIP-Schalter, um die Impulse pro Umdrehung bzw. Impulse pro Verstellstrecke festzulegen
   f) weitere Ereignisse, bei denen eine permanente oder eine z.B. über DIP-Schalter zuschaltbare Korrektur der Zählimpulse stattfinden muss, damit nicht messbare Impulse berücksichtigt werden:
      Endschalter schalten Motorrelais
      Mit Bremsschaltung zum Bremsen in Endlagen
      Mechanische Bremse in den Endlagen oder Anschläge

Die Erfindung ist nicht auf das oben Beschriebene beschränkt, sondern auf vielfältige Art und Weise modifizierbar.

So kann zum Beispiel anstelle des Widerstands 15 eine andere Art von Strom-/Spannungsumsetzer verwendet werden, wie beispielsweise ein Optokoppler mit galvanischer Trennung, ein Thermoelement, ein Transformator, Auskopplung eines Messsignals über Kondensatoren, usw.

Die Steuerleitung 21 kann aus mehreren Leitungen bestehen und/oder kodierte Signale übertragen, wobei dazu der Steuerblock 11 und die Motorsteuerung 8 entsprechend ausgebildet sind.

Die Steuerleitung 21 kann mit einer optischen und/oder akustischen Positionsanzeige verbunden sein.

Die Vorrichtung 10 kann ein Ersatz für Potentiometeraufnehmer sein, wenn sie einen nichtflüchtigen Speicher zur Speicherung der Positionen aufweist.

Im Falle einer manuellen Verstellung des Abtriebsglieds 3 kann dies beim Erreichen einer Endposition X1, X2 erkannt werden. Ist die manuelle Verstellung zu einer Position zwischen den Endpositionen X1, X2 erfolgt, so muss eine Referenzfahrt vor Aufnahme eines regulären Betriebs gemacht werden.

Eine Motortyperkennung zur Verwendung der korrespondierenden Tabellendaten in der Speichereinrichtung kann über Kodierungen im Motorkabel mittels DIP-Schalter erfolgen. Damit können auch die Verhältnisse Impulse/Umdrehung und Impulse/Verstellwegeinheit voreingestellt werden. Die sogenannte Kodierung im Motorkabel kann dadurch erfolgen, dass das an die Motorsteuerung mittels eines Steckers ansteckbare Motorkabel weitere Steckkontakte aufweist, wobei die weiteren Stecckontakte mit einem oder mehreren elektronischen Bauteilen wie Widerständen und/oder Schaltern verbunden sind, wobei jedem Verhältnis Impulse/Umdrehung ein fester Widerstandswert und/oder eine feste Schalterstellung zugeordnet ist, ferner der Widerstandswert und/oder die Schalterstellung mittels der Motorsteuerung 8 auswertbar gestaltet ist, derart, dass die vom Komparator 12 ermittelten Impulse durch einen dem Widerstandswert und/oder der Schalterstellung korrespondierendem Faktor dem Zähler 17 auferlegt werden.

Über DIP-Schalter können auch Korrekturwerte voreingestellt werden.

Es ist auch denkbar, dass die Vorrichtung 10 mit einer Memory-Bedienungseinheit ausgestattet werden kann.

Das Abtriebsglied 3 kann auch für kombinierte Bewegungsabläufe, z.B. lineare Bewegung und Drehbewegung, oder Bewegungen auf Kurvenbahnen vorgesehen sein.

Es können mehrere Auswerteschaltungen angeordnet sein, wobei jedem Motor oder einer Anzahl Motoren eine Auswerteschaltung zugeordnet ist..

### Bezugszeichenliste

- 1: Elektromotorischer Antrieb
- 2: Motor
- 3: Abtriebsglied
- 4: Nocke
- 5: Unterer Endschalter
- 6: Oberer Endschalter
- 7: Verstellweg
- 8: Motorsteuerung
- 9: Bedienungseinheit
- 10: Vorrichtung
- 11: Steuerblock
- 12: Komparator
- 13: Filter
- 14: Mittelwertblock
- 15: Widerstand
- 16: Steuereinrichtung
- 17: Zähler
- 18: Speicher
- 19: Messsignalabgriff
- 20: Endschalterabgriff
- 21: Steuerleitung
- 22: Datenleitung
- 23: Motorleitung
- 24: Endschalterleitung
- 25: Energieversorgung
- S1...S4: Verfahrensschritt
- X1, X2: Endposition

## Patentansprüche

1. Verfahren zur Positionierung eines Abtriebsgliedes (3) eines elektromotorischen Antriebs (1), wobei der elektromotorische Antrieb (1) zumindest einen elektrischen Motor (2), ein damit gekoppeltes Drehzahlreduziergetriebe, mit welchem das Abtriebsglied (3) antriebstechnisch gekoppelt und linear verfahrbar und/oder rotierbar bewegbar ist, und eine Energieversorgung (25) mit einer konstanten, hochstabilen Gleichspannung mit einem Schaltnetzteil aufweist, wobei das Abtriebsglied (3) bei Erreichen einer vorbestimmten Position einen Endschalter (5, 6) und/oder einen Referenzschalter und/oder ein Schaltmittel betätigt, für ein Möbel, **gekennzeichnet durch** folgende Verfahrensschritte:
(S1) Ermitteln einer zuletzt gespeicherten Position des Abtriebsgliedes (3) des elektromotorischen Antriebs (1) durch Auslesen eines Zählerwertes und Erkennen einer gewünschten Verstellrichtung;
(S2) Verstellen des Zählerwertes durch Aufaddieren oder Abziehen von Impulsen, die aus der Gegen-EMK einer Kommutierung des elektromotorischen Antriebs (1) aufbereitet werden; wobei die Impulse aus der Gegen-EMK der Kommutierung des elektromotorischen Antriebs (1) durch Filtern, Mittelwertbildung und Vergleichen aufbereitet werden, indem die Impulse gleichzeitig einem Filter (13) und einem Mittelwertblock (14), die eingangsseitig parallel geschaltet sind, zugeführt werden, und wobei dann das gefilterte Ausgangssignal des Filters (13) und das Mittelwert-Ausgangsignal des Mittelwertblocks (14) von einem Komparator (12) verglichen werden,
(S3) Ermitteln eines Korrekturwertes bei Anhalten des elektromotorischen Antriebs (1) anhand von Randbedingungen; und
(S4) Korrigieren des zuletzt erhaltenen Zählerwertes anhand des ermittelten Korrekturwertes und Speichern des so korrigierten Zählerwertes als aktuelle Position des Abtriebsgliedes (3) des elektromotorischen Antriebs (1).

2. Verfahren nach Anspruch 1, **dadurch gekennzeichnet, dass** beim Ermitteln des Korrekturwertes eine Art des Anhaltens anhand von Endschaltern und/oder Schaltmitteln des elektromotorischen Antriebs (1) erfasst wird.

3. Verfahren nach Anspruch 2, **dadurch gekennzeichnet, dass** beim Ermitteln des Korrekturwertes eine Art des Anhaltens bei einer beliebigen Position des Abtriebsgliedes (3) anhand von Motorsteuermitteln des Motors (2) des elektromotorischen Antriebs (1) erfasst wird.

4. Verfahren nach Anspruch 3, **dadurch gekennzeichnet, dass** die Motorsteuermittel des Motors (2) als mindestens ein Relais, Halbleiterschalter oder/und manuell betätigbares Schaltelement ausgebildet sind.

5. Verfahren nach einem der Ansprüche 2 bis 4, **dadurch gekennzeichnet, dass** beim Ermitteln des Korrekturwertes eine Geschwindigkeit und/oder Belastung des elektromotorischen Antriebs (1) als Randbedingungen erfasst wird.

6. Verfahren nach Anspruch 5, **dadurch gekennzeichnet, dass** die Geschwindigkeit und/oder Belastung des elektromotorischen Antriebs (1) aus der Gegen-EMK der Kommutierung des elektromotorischen Antriebs (1) ermittelt wird.

7. Verfahren nach einem der vorhergehenden Ansprüche, **dadurch gekennzeichnet, dass** beim Speichern des korrigierten Zählerwertes als aktuelle Position des Abtriebsgliedes (3) des elektromotorischen Antriebs (1) der korrigierte Zählerwert mit einem vorgebbaren Grenzwert verglichen wird und ein Signal anhand dieses Vergleichs ausgegeben wird.

8. Verfahren nach einem der vorhergehenden Ansprüche, **dadurch gekennzeichnet, dass** durch Anfahren zumindest eines Endschalters (5, 6) eine Referenzposition des Abtriebsgliedes (3) des elektromotorischen Antriebs (1) gebildet wird, wobei der Zählerwert auf einen vorgebbaren Referenzwert eingestellt wird.

9. Verfahren nach einem der vorhergehenden Ansprüche, **dadurch gekennzeichnet, dass** in einer Folge von Impulsen aus der Gegen-EMK der Kommutierung des elektromotorischen Antriebs (1) fehlende Impulse erkannt und entsprechend in der Auswertung, insbesondere mittels eines Korrekturwertes, ergänzt werden.

10. Positioniervorrichtung (10) eines Abtriebsgliedes (3) eines elektromotorischen Antriebs (1), wobei der elektromotorische Antrieb (1) zumindest einen elektrischen Motor (2), ein damit gekoppeltes Drehzahlreduziergetriebe, mit welchem das Abtriebsglied (3) antriebstechnisch gekoppelt und linear verfahrbar und/oder rotierbar bewegbar ist, und eine Energieversorgung (25) aufweist, wobei das Abtriebsglied (3) bei Erreichen einer vorbestimmten Position einen Endschalter (5, 6) und/oder einen Referenzschalter und/oder ein Schaltmittel betätigt, für ein Möbel, mit:
einem Messwertgeber in Form eines Widerstands (15) zur Erfassung der Gegen-EMK einer Kommutierung eines Motors des zuzuordnenden elektromotorischen Antriebs (1);
einem Filter (13) und einem Komparator (12) zur Aufbereitung von Impulsen des Messwertgebers; und mit
einem Steuerblock (11) zur Auswertung von Impulsen des Messwertgebers, wobei der Steuerblock (11) Folgendes aufweist:
eine Steuereinrichtung (16), einen Zähler (17) und eine Speichereinrichtung (18), wobei die Steuereinrichtung (16) zur Ermittlung zumindest eines in der Speichereinrichtung (18) gespeicherten Korrekturwertes und zur Verknüpfung dieses Korrekturwertes mit einem Zählerwert ausgestaltet ist,
**dadurch gekennzeichnet, dass**
die Energieversorgung (25) eine konstante, hochstabile Gleichspannung mit einem Schaltnetzteil aufweist, dass weiter ein Mittelwertblock (14) vorhanden ist,
wobei der Filter (13) und der Mittelwertblock (14) eingangsseitig parallel geschaltet mit dem Widerstand (15) verbunden sind, und wobei der Steuerblock (11) zur Durchführung eines Verfahrens gemäß einem der Ansprüche 1 bis 9 eingerichtet ist.

11. Positioniervorrichtung (10) nach Anspruch 10, **dadurch gekennzeichnet, dass** die Steuereinrichtung (16) mit zumindest einem Dateneingang für Randbedingungen versehen ist.

12. Positioniervorrichtung (10) nach Anspruch 10 oder 11, **dadurch gekennzeichnet, dass** die Steuereinrichtung (16) zur Ausgabe eines Signals anhand eines Vergleichs zwischen dem mit dem Korrekturwert verknüpften Zählerwert mit einem vorgebbaren Positionswert ausgebildet ist.

13. Positioniervorrichtung (10) nach einem der Ansprüche 10 bis 12, **dadurch gekennzeichnet, dass** die Vorrichtung (10) eine Funktionseinheit zur Erkennung von fehlenden Impulsen in einer Impulsfolge der Gegen-EMK der Kommutierung des elektromotorischen Antriebs (1) und zur Erzeugung eines entsprechenden Korrekturwertes aufweist.

14. Positioniervorrichtung (10) nach einem der Ansprüche 10 bis 13, **dadurch gekennzeichnet, dass** der Messwertgeber zur Erfassung der Gegen-EMK der Kommutierung des elektromotorischen Antriebs (1) des Motors (2) des zuzuordnenden elektromotorischen Antriebs (1) vor einem Motorschaltmittel der Motorsteuerung (8) in oder/und an einer Zuleitung zu dem Motorschaltmittel oder/und hinter dem Schaltmittel zwischen diesem und dem Motor (2) des zuzuordnenden elektromotorischen Antriebs (1) in oder/und an mindestens einer Motorzuleitung (23) angeordnet ist.

15. Elektromotorischer Antrieb (1) für ein Möbel mit einer Positioniervorrichtung (10) nach einem der Ansprüche 10 bis 14.

## Claims

1. Method for positioning an output member (3) of an electromotive drive (1), wherein the electromotive drive (1) comprises at least one electric motor (2), a speed reduction gear coupled thereto, with which the output member (3) is coupled in terms of drive and can be moved linearly and/or rotatably, and a power supply (25) with a constant, highly stable DC voltage with a switched-mode power supply, wherein the output member (3) actuates a limit switch (5, 6) and/or a reference switch and/or a switching means for an item of furniture when a predetermined position is reached, **characterized by** the following method steps:
(S1) Determining a last stored position of the output member (3) of the electromotive drive (1) by reading a counter value and detecting a desired adjustment direction;
(S2) Adjusting the counter value by adding or subtracting pulses which are processed from the back EMF of a commutation of the electromotive drive (1); wherein the pulses from the back EMF of the commutation of the electromotive drive (1) are conditioned by filtering, averaging and comparing by simultaneously supplying the pulses to a filter (13) and an averaging block (14) which are connected in parallel on the input side, and wherein the filtered output signal of the filter (13) and the average output signal of the averaging block (14) are then compared by a comparator (12),
(S3) Determining a correction value when the electromotive drive (1) is stopped on the basis of boundary conditions; and
(S4) Correcting the last counter value obtained on the basis of the correction value determined and storing the counter value thus corrected as the current position of the output member (3) of the electromotive drive (1).

2. Method according to claim 1, **characterized in that** when determining the correction value, a type of stopping is detected by means of limit switches and/or switching means of the electromotive drive (1).

3. Method according to claim 2, **characterized in that** in determining the correction value, a type of stopping at an arbitrary position of the output member (3) is detected by motor control means of the motor (2) of the electromotive drive (1).

4. Method according to claim 3, **characterized in that** the motor control means of the motor (2) are designed as at least one relay, semiconductor switch or/and manually operable switching element.

5. Method according to one of claims 2 to 4, **characterized in that** a speed and/or load of the electromotive drive (1) is detected as boundary conditions when determining the correction value.

6. Method according to claim 5, **characterized in that** the speed and/or load of the electromotive drive (1) is determined from the back EMF of the commutation of the electromotive drive (1).

7. Method according to one of the preceding claims, **characterized in that** when the corrected counter value is stored as the current position of the output member (3) of the electromotive drive (1), the corrected counter value is compared with a predeterminable limit value and a signal is output on the basis of this comparison.

8. Method according to one of the preceding claims, **characterized in that** a reference position of the output member (3) of the electromotive drive (1) is formed by approaching at least one limit switch (5, 6), wherein the counter value is set to a predeterminable reference value.

9. Method according to one of the preceding claims, **characterized in that** missing pulses are detected in a sequence of pulses from the back EMF of the commutation of the electromotive drive (1) and are supplemented accordingly in the evaluation, in particular by means of a correction value.

10. Positioning device (10) of an output member (3) of an electromotive drive (1), wherein the electromotive drive (1) comprises at least one electric motor (2), a speed-reducing gear coupled thereto, with which the output member (3) is coupled in terms of drive and can be moved linearly and/or rotatably, and a power supply (25), wherein the output member (3) actuates a limit switch (5, 6) and/or a reference switch and/or a switching means when a predetermined position is reached, for an item of furniture, comprising:
a transducer in the form of a resistor (15) for detecting the back EMF of a commutation of a motor of the electromotive drive (1) to be assigned;
a filter (13) and a comparator (12) for conditioning pulses of the transducer; and comprising
a control block (11) for evaluating pulses from the transducer, wherein the control block (11) comprises the following:
a control device (16), a counter (17) and a memory device (18), wherein the control device (16) is designed to determine at least one correction value stored in the memory device (18) and to link this correction value to a counter value,
**characterized in that**
the power supply (25) has a constant, highly stable DC voltage with a switched-mode power supply, **in that** furthermore an averaging block (14) is present, wherein the filter (13) and the averaging block (14) are connected in parallel on the input side to the resistor (15), and wherein the control block (11) is adapted for carrying out a method according to one of claims 1 to 9.

11. Positioning device (10) according to claim 10, **characterized in that** the control device (16) is provided with at least one data input for boundary conditions.

12. Positioning device (10) according to claim 10 or 11, **characterized in that** the control device (16) is designed to output a signal on the basis of a comparison between the counter value associated with the correction value and a predeterminable position value.

13. Positioning device (10) according to one of claims 10 to 12, **characterized in that** the device (10) has a functional unit for detecting missing pulses in a pulse train of the back EMF of the commutation of the electromotive drive (1) and for generating a corresponding correction value.

14. Positioning device (10) according to one of claims 10 to 13, **characterized in that** the transducer for detecting the back EMF of the commutation of the electromotive drive (1) of the motor (2) of the electromotive drive (1) to be assigned is arranged upstream of a motor switching means of the motor control unit (8) in or/and on a supply line to the motor switching means or/and downstream of the switching means between the latter and the motor (2) of the electromotive drive (1) to be assigned in or/and on at least one motor supply line (23).

15. Electromotive drive (1) for an item of furniture having a positioning device (10) according to one of claims 10 to 14.

## Revendications

1. Procédé de positionnement d'un organe de sortie (3) d'un entraînement à moteur électrique (1), l'entraînement à moteur électrique (1) présentant au moins un moteur électrique (2), un réducteur de vitesse couplé à celui-ci, avec lequel l'organe de sortie (3) est couplé en entraînement et peut être déplacé linéairement et/ou en rotation, et une alimentation en énergie (25) par une tension continue constante hautement stable avec une alimentation à découpage, l'organe de sortie (3) actionnant un interrupteur de fin de course (5, 6) et/ou un interrupteur de référence et/ou un moyen de commutation lorsqu'il atteint une position prédéterminée, pour un meuble, **caractérisé par** les étapes de procédé consistant à :
(S1) déterminer une dernière position mémorisée de l'organe de sortie (3) de l'entraînement à moteur électrique (1) en lisant une valeur de compteur et en identifiant une direction de réglage souhaitée ;
(S2) régler la valeur de compteur en additionnant ou en soustrayant des impulsions qui sont traitées à partir de la force contre-électromotrice d'une commutation de l'entraînement à moteur électrique (1) ; dans lequel les impulsions provenant de la force contre-électromotrice de la commutation de l'entraînement à moteur électrique (1) sont traitées par filtrage, calcul de moyenne et comparaison, les impulsions étant amenées simultanément à un filtre (13) et à un bloc de calcul de moyenne (14) qui sont montés en parallèle du côté de l'entrée, et ensuite le signal de sortie filtré du filtre (13) et le signal de sortie de moyenne du bloc de calcul de moyenne (14) sont comparés par un comparateur (12),
(S3) déterminer une valeur de correction lorsque l'entraînement à moteur électrique (1) s'arrête sur la base de conditions limites ; et
(S4) corriger la dernière valeur de compteur obtenue sur la base de la valeur de correction déterminée et mémoriser la valeur de compteur ainsi corrigée en tant que position actuelle de l'organe de sortie (3) de l'entraînement à moteur électrique (1).

2. Procédé selon la revendication 1, **caractérisé en ce que**, lors de la détermination de la valeur de correction, un type de l'arrêt est détecté à l'aide d'interrupteurs de fin de course et/ou de moyens de commutation de l'entraînement à moteur électrique (1).

3. Procédé selon la revendication 2, **caractérisé en ce que**, lors de la détermination de la valeur de correction, un type de l'arrêt dans une position quelconque de l'organe de sortie (3) est détecté à l'aide de moyens de commande de moteur du moteur (2) de l'entraînement à moteur électrique (1).

4. Procédé selon la revendication 3, **caractérisé en ce que** les moyens de commande de moteur du moteur (2) sont conçus comme au moins un relais, un commutateur à semi-conducteurs et/ou un élément de commutation actionnable manuellement.

5. Procédé selon l'une des revendications 2 à 4, **caractérisé en ce que**, lors de la détermination de la valeur de correction, une vitesse et/ou une charge de l'entraînement à moteur électrique (1) sont détectées en tant que conditions limites.

6. Procédé selon la revendication 5, **caractérisé en ce que** la vitesse et/ou la charge de l'entraînement à moteur électrique (1) est déterminée à partir de la force contre-électromotrice de la commutation de l'entraînement à moteur électrique (1).

7. Procédé selon l'une des revendications précédentes, **caractérisé en ce que**, lorsque la valeur de compteur corrigée est mémorisée comme position actuelle de l'organe de sortie (3) de l'entraînement à moteur électrique (1), la valeur de compteur corrigée est comparée avec une valeur limite prédéfinissable et un signal est émis sur la base de cette comparaison.

8. Procédé selon l'une des revendications précédentes, **caractérisé en ce qu'**une position de référence de l'organe de sortie (3) de l'entraînement à moteur électrique (1) est formée par approche d'au moins un interrupteur de fin de course (5, 6), la valeur du compteur étant réglée sur une valeur de référence prédéfinissable.

9. Procédé selon l'une des revendications précédentes, **caractérisé en ce que** des impulsions manquantes sont détectées dans une séquence d'impulsions de la force contre-électromotrice de la commutation de l'entraînement à moteur électrique (1) et sont complétées en conséquence dans l'évaluation, en particulier au moyen d'une valeur de correction.

10. Dispositif de positionnement (10) d'un organe de sortie (3) d'un entraînement à moteur électrique (1), l'entraînement à moteur électrique (1) présentant au moins un moteur électrique (2), un réducteur de vitesse couplé à celui-ci, avec lequel l'organe de sortie (3) est couplé en entraînement et peut être déplacé linéairement et/ou en rotation, et une alimentation en énergie (25), l'organe de sortie (3) actionnant un interrupteur de fin de course (5, 6) et/ou un interrupteur de référence et/ou un moyen de commutation lorsqu'il atteint une position prédéterminée, pour un meuble, comprenant :
un capteur de mesure sous la forme d'une résistance (15) pour détecter la force contre-électromotrice d'une commutation d'un moteur de l'entraînement à moteur électrique (1) devant lui être associé ;
un filtre (13) et un comparateur (12) pour traiter des impulsions du capteur de mesure ; et
un bloc de commande (11) pour évaluer des impulsions du capteur de mesure, le bloc de commande (11) présentant :
un moyen de commande (16), un compteur (17) et un moyen de mémorisation (18), le moyen de commande (16) étant conçu pour déterminer au moins une valeur de correction mémorisée dans le moyen de mémorisation (18) et pour lier cette valeur de correction à une valeur de compteur,
**caractérisé en ce que**
l'alimentation en énergie (25) est une tension continue hautement stable avec une alimentation à découpage, qu'un bloc de calcul de moyenne (14) est en outre présent, le filtre (13) et le bloc de calcul de moyenne (14), montés en parallèle du côté de l'entrée, étant reliés à la résistance (15), et le bloc de commande (11) étant conçu pour mettre en œuvre un procédé selon l'une des revendications 1 à 9.

11. Dispositif de positionnement (10) selon la revendication 10, **caractérisé en ce que** le moyen de commande (16) est pourvu d'au moins une entrée de données pour des conditions limites.

12. Dispositif de positionnement (10) selon la revendication 10 ou 11, **caractérisé en ce que** le moyen de commande (16) est conçu pour émettre un signal sur la base d'une comparaison entre la valeur de compteur liée à la valeur de correction et une valeur de position prédéfinissable.

13. Dispositif de positionnement (10) selon l'une des revendications 10 à 12, **caractérisé en ce que** le dispositif (10) présente une unité fonctionnelle pour détecter des impulsions manquantes dans une séquence d'impulsions de la force contre-électromotrice de la commutation de l'entraînement à moteur électrique (1) et pour générer une valeur de correction correspondante.

14. Dispositif de positionnement (10) selon l'une des revendications 10 à 13, **caractérisé en ce que** le capteur de mesure pour détecter la force contre-électromotrice de la commutation de l'entraînement à moteur électrique (1) du moteur (2) de l'entraînement à moteur électrique (1) devant lui être associé est disposé en amont d'un moyen de commutation de moteur de la commande de moteur (8) dans ou/et sur une ligne d'alimentation du moyen de commutation de moteur ou/et en aval du moyen de commutation entre celui-ci et le moteur (2) de l'entraînement à moteur électrique (1) devant lui être associé dans ou/et sur au moins une ligne d'alimentation de moteur (23).

15. Entraînement à moteur électrique (1) pour un meuble doté d'un dispositif de positionnement (10) selon l'une des revendications 10 à 14.
